# EUROPEAN PATENT APPLICATION

(11) **EP 4 395 257 A1**
(43) Date of publication of application: **03.07.2024**
(21) Application number: 22383315.3
(22) Date of filing: 30.12.2022
(51) Int. Cl.: H04L 41/5019, H04L 41/5067

(54) **METHOD, SYSTEM, AND COMPUTER PROGRAMS FOR NETWORK TRAFFIC PRIORITIZATION IN A CELLULAR NETWORK**

(71) Applicant: Telefonica Innovacion Digital SL, 28050 Madrid (ES)
(72) Inventor: LUTU, Andra, 28013 Madrid (ES)
(74) Representative: Carlos Hernando, Borja

(57) **Abstract**

A method, system and computer programs for network traffic prioritization in a cellular network are proposed. The method comprises determining, for at least one given user, a user's perception matrix, which defines a baseline user subjective experience of some conditions of the cellular network, by processing one or more neurophysiological signals of the given user; determining, latency perception thresholds of the given user, which consider emotional reactions of the given user and how an increase of a latency response affects the given user, by executing an emotion bifactorial model that involves both intensity of the emotion/s and how positive or negative the emotion is/are, and by computing a variation of observed network QoS metrics and estimating their impact on a QoE of the given user; and determining, an allocation of network resources to a computing device of the user based on the determined user's perception matrix and latency perception thresholds.

## Description

### Technical Field

The present invention relates to a method, system, and computer programs for network traffic prioritization of cellular networks.

### Background of the Invention

Wide area, physical infrastructures (e.g., cellular networks) are often equipped with sensors that perform monitoring and utilize a plethora of AI techniques for extracting intelligence from the data feeds. These sensors constitute the "front line" of an loT network, also known as the edge. The loT network is composed of intermediate levels, where various sites receive data transmitted by the edge devices before this data finally reaches the cloud at the top-tier of the architecture. Edge-devices tend to have limited memory, CPU and communication capacity, and constrained power supply. In the telecommunications domain, Al-driven solutions need to be applied at the edge, for scheduling and orchestration, to effectively route mobile devices among cells, as users dynamically change location. Workload redistribution at the cell level additionally requires the computational power of fog and cloud environments, to efficiently deal with the large amounts of multi-dimensional data, originating from the time-varying traffic patterns of users. Current solutions orchestrate workload redistribution by considering primarily network metrics or - at best - weak proxies of the quality of experience (QoE), while trying to optimize for network KPIs like latency or throughput. Such weak proxies include questionnaires and self-reports about the QoS. However, research on human information processing (HIP) has demonstrated that human beings are not consciously aware of the mental processes determining their behaviour. To this end, psychophysiological methods can be very helpful in unveiling attentional and emotional reactions that are not consciously available to us and can facilitate the study of the impact of network conditions, such as latency or quality of service (QoS), on user behaviour.

### Impact of Mobile Web Browsing Latency

The rapid, and often unplanned, urbanization has been a critical driver behind major social and critical infrastructure changes. These changes, and the significant mobility and sustainability challenges they bring, can only be further exacerbated as this unprecedented transition from rural to urban areas continues. For instance, in recent decades, rapid urbanization practices, along with the widespread adoption of loT-based technologies and mobile devices by the market, have created a greater need for better telecommunication services and faster Internet connectivity. The Internet is also going mobile. To date, billions of mobile users are accessing the Internet as they move. For their Internet access, the cellular network plays a pivotal role since it is the only global-scale infrastructure with ubiquitous mobility support.

Presently, web browsing is considered the most important Internet service. In fact, nowadays, most services and applications are made available through the web. Unlike desktop web browsing, which involves more powerful hardware and more reliable connection speeds, mobile devices must rely on carriers' data network. This means that loading sites on mobile devices is often slower than on a desktop setting - even when the site is optimized for mobile. This has many implications. Foremost, site performance has been, from an economic standpoint, a major determinant to a website's success. That is, a website that is characterized by relatively high page load times will not only degrade the experience of its users that are accustomed to sub-second response times but will be also penalized with respect to its page ranking, since site speed is one of the factors of the ranking algorithm for many commercial search sites.

In a joint conference presentation, Bing and Google scientists presented a series of latency experiments. Bing reported that an added latency of 1.5 seconds to their usual page loading times reduced the queries per user by 1.8%, the revenues per user by 4.3%, and the overall satisfaction by 3.8%. In a similar vein, Google reported that a 400 ms delay resulted in a 0.59% reduction in the number of searches per user and diminished traffic by 20%. What's even more noteworthy, is that the slower user experience had a long-term effect on search behaviour Additionally, Amazon reported that a 100 ms latency would result in a 1% revenues drop, which amounts to a loss of $745 million per year1. The aforementioned reports point out that a slow website can incur considerable negative effects on Search Engine Optimization (SEO), conversion rates, revenue, and QoE.

From a user-centric standpoint, such findings have motivated a large body of research to investigate the impact of response time on user experience. In the more specific context of web systems, earlier work investigated the impact of page load time on web browsing behaviour. Taylor et al. [1] reported page load times tolerable by users who are seeking information online to be in the 7-11 seconds range. Despite being outdated, [2] also provides references to studies on identifying the largest page load time that users can tolerate. A related line of research has investigated the trade-off between the cost of searching in information seeking. However, the bulk of these studies were conducted over a decade ago, when people used primarily desktop computers to browse the internet and were accustomed to slower download speeds.

Given that web traffic is higher on mobile and web browsing is amongst the dominant applications on Mobile Broadband (MBB) networks, the dependency on MBB networks and the widespread availability of LTE is boosting user expectations towards fast, reliable, and pervasive connectivity. Thus, it needs to be assumed that people have adapted to faster internet speeds, and that the expectations of what constitutes fast internet have changed. Furthermore, the MNOs are responsible for the shortcomings in the mobile experience. This, in turn, can have a negative impact on the revenues of MNOs. On the system side, MNOs are known to make major investments in hardware infrastructures to cope with the growth of their user bases user bases and data traffic volume, essentially trying to maintain their response times at reasonable levels. These investments incur a financial burden on MNOs and may even result in financial losses if the reduction attained in web browsing response times due to these investments does not have any positive impact on the QoE of users.

### Measuring QoE for the Mobile Network

Given its ubiquity, the quality of mobile experiences is important to both users (that want to maximize their own utility) and mobile network operators (that want to optimize their services to improve customer satisfaction and mitigate the risk of churn) alike. Research into the quality of mobile experiences falls into the research domain of mobile QoE. From a practical point of view, reliably measuring QoE in the mobile setting is challenging, e.g., mobile web browsing entails loading a single web page that fetches a variety of multimedia content from different servers and platforms, and involves a mix of embedded services. In this rather complex process, the network can significantly impact the user experience, making it necessary for ISPs to deploy effective means for tracking their customers' QoE.

In particular, the mobile QoE domain considers the theory, methods, and metrics for evaluating mobile services in a way that aligns with how end-users experience them. For example, the use of non-linear scales, like mean opinion score, and contextual information in QoE aligns with the non-linearity and contextual dependence of human perception systems. QoE contrasts with the quality of service (QoS) domain which, nowadays, considers technical and more easily accessible network measures, such as throughput, delay, and loss. Given these related domains, significant research has focused on modeling QoE via network QoS and contextual data [3,4,5,6,7]. Furthermore, such QoE modeling research has been performing field-based experiments with device-based methodologies, where data has been collected directly from a mobile device through an app.

The web has been also studied extensively using various web QoE measurement tools and methodologies [8,9,10,11]. However, for the most part, these studies have focused on fixed-line networks. Some prior work examined web QoE in smartphones and tablets by accessing cloud hosted web service [x18b] or the QoE provisioning of popular mobile applications using laboratory tests with end-device through passive measurement [x17b]. They also studied QoE from feedback obtained in operational MNOs using crowdsourcing and demonstrated the impact of access bandwidth and latency on QoE of different services.

In [12], the authors proposed an ML approach to predicting the web QoE from the network traces and studied the impact of network configurations on the web QoE. In addition, [13] analyzed call records and studied WAP support for popular websites, while in [14] the authors built a testbed that allowed to compare the low-level page load activities in mobile and non-mobile browsers and demonstrated the need for mobile browser optimizations to improve the mobile web QoE. Finally, in [15], the authors investigated the impact of device performance on mobile Internet QoE and showed that web applications are more sensitive for low-end hardware devices compared to video applications.

### Traffic Prioritization in 5G and beyond

Network slicing is considered as a key-enabler for flexibly deploying and managing network resources, especially in service-based architectures. To guarantee strict latency and throughput requirements in next-generation access technologies (e.g., 5G and beyond), slicing has been proposed to service providers as a dynamic and scalable mechanism for customized resource management. Thus, slicing enables dynamic isolation of physical network resources into logical networks with varying QoS requirements. Slicing ensures optimal utilization of network resources.

Leveraging slicing, resource allocation and traffic prioritization in the cellular networks have been handled to through various techniques ranging from three-sided matchmaking between user, operator and the network function placements [16], timely admission schemes through smart queues [17] and machine learning [18], service-aware resource allocation and network slicing [19, 22, 24] user plane placement optimization [20, 21] and from a perspective of caching [23]. Several works considered SDN to manage the resources within a 5G setup [25, 26] to optimize the resource allocation during mobility scenarios [27] and through radio resource slicing [28, 29].

However, owing to the diverse QoS requirements of end users/services and the limitation of available network resources, efficiently allocate network resources among service slices and user equipment (UEs) is a significant issue. The current prevailing approach to deal with the multiplexing of user traffic and commercial services over the same network is based on the exploitation of the 3GPP QoS prioritization, and pre-emption (QPP) capabilities. At the network level, these QPP capabilities include the 5G QoS Identifier (5QI) and Allocation and Retention Priority (ARP) parameters that characterize the behavior of the data delivery services provided by the network. In this regard, the assignment of higher priority 5QI/ARP to all connected users in a cell could be appropriate for situations where the aggregated cell traffic load is below the network capacity. Present invention leverages this feature, and when a cell is under a peak traffic load (I.e. facing congestion in the network), the traffic prioritization is achieved based on the expected subjective experience for 5G and beyond ecosystems.

Similarly, to prior work in this area, present invention also examines the relationship between QoS measurements and QoE evaluations. However, existing device based QoE modeling research has limitations regarding the level of realism, sample size, and network quality and therefore may over-estimate the practical performance of such analyses. Specifically, prior studies have instructed users to perform predefined application (app) actions, such as scrolling the Facebook news feed, and, thus, the situations are only semi-realistic. Additionally, said studies consider mainly standardized questionnaires for measuring perceptual aspects or affective reactions of QoE, among others, which are unlikely to capture phenomena over which people have little or no awareness and, thus, cannot report information about. In what follows, we discuss the limitations of current QoE methodologies, which present invention narrows down to lack of external and internal validity, and resource allocation mechanisms, that rely on weak proxies of the human subjective experience.

### Capturing the Nuances of the Mobile QoE

Research on Human Information Processing (HIP) has provided ample evidence that human beings are not consciously aware of the mental processes determining their behaviour. Such unconscious influences do not need to be restricted to basic or low-level mental processes, but can also reach high-order psychological processes like motivations, preferences, or complex behaviors]. This has obvious implications when it comes to the assessment of user experience in settings where, so far, science has overlooked the human factor and has relied upon weak proxies of that (e.g., hardware- or network-centric).

One example of an extensively-studied and relevant cognitive phenomenon is attention. Cognitive science has provided numerous findings that conscious information processing is primarily serial. When processing information in situations that require to shift the focus of attention between different tasks or stimuli (e.g., such as those observed when one is interacting with a smartphone or tablet), this results in an increase in the effort required to process that information. The study of attention has been in the field of basic cognitive psychology has been studied primarily by means of experimental paradigms that allow to determine, for example, the degree to which performance on a given task is affected by concurrently performing a secondary task [30, 31], or the actual performance cost of attention shifts [32, 33]. Regarding emotions, a theoretical approach that has proven useful in quantifying emotional reactions defines emotions as a function of two components: affective or hedonic valence, that is if the emotion is positive or negative, and arousal, meaning the intensity of the emotion. However, several other theories and methods have been employed in the field of emotion research.

A wide collection of methods is also available to measure such aspects, grounded on different methodologies depending on the type of question addressed. For example, to analyze conscious processes, there are standardized questionnaires for measuring perceptual aspects, perceived usability, cognitive working load, or affective reactions, among others. However, since it is unlikely that people can report information about processes over which they have little or no awareness, psychological research has traditionally favored methods that allow exploring unconscious or automated psychological processes. Such methods provide online, moment by moment information, and are not dependent on subjective biases such as social desirability. A broad classification of these methods could be: (i) behavioural, that is, measurement of psychophysical thresholds (e.g., re- action times, motion, eye tracking), and (ii) neurophysiological, which entail measuring physiological changes in users in response to psychological stimuli.

Behavioural methods (with the exception of tracking measures) often require designing specific tasks where different variables are manipulated in order to measure psychological effects associated with different aspects of their performance. Neurophysiological signals on the other hand, allow psychological measurements while users are interacting with the assessed technology, and have been favored in media research. When the central nervous system is the object of measurement, electrical brain activity (EEG) is the most widely used method, as it can provide information about attention and cognitive effort, as well as about emotional reactions. Peripheral nervous system activity measurements are very informative when measuring emotional reactions as well and can also signal some of the attentional reactions. The most popular methods are electrodermal activity, which provides information about emotional arousal and cognitive effort [30], facial electromyography, which can inform about the valence of emotional reactions, and phasic and tonic changes in heart rate, which are related to attention, cognitive effort and stress, and emotional reactions.

To understand the impact of phenomena, such as the effect of latency on user QoE in mobile browsing, the measurement of neuro-physiological signals with self-reported measures of affect, attention, and usability of the system, all known constituent of QoE, need to be combined. This approach will allow to explore both conscious and "not-necessarily" conscious aspects of the user experience and obtain an accurate picture of how lower or higher latency values affect it. To this end, the work of understanding the effect of latency on QoE in the context has to be revisited. Moreover, since previous work focused primarily on desktop search, the analysis proposed by present invention needs to be situated on the mobile setting and consider a wide range of network conditions, the effect of which is not well understood.

One of the main novelty of present invention is in the considered psychophysiological measurements that aim to reveal the unconscious effects of network performance, such as that measured in terms of latency, on the user subjective experience. The invention is premised on scientific knowledge that there are sizeable effects on users' physiological reactions in response to latency and that neuro-physiological measures are more effective in capturing these reactions than the information gathered by means of self-reports or purely network-centric measurements. To the best of the inventors' knowledge, no such measurements have been operationalized before.

### References:

[1] Nolan J. Taylor, Alan R. Dennis, and Jeff W. Cummings. 2013. Situation normality and the shape of search: The effects of time delays and information presentation on search behavior. Journal of the American Society for Information Science and Technology 64, 5 (2013), 909-928.
[2] Fiona Fui-Hoon Nah. 2004. A study on tolerable waiting time: how long are Web users willing to wait? Behaviour & Information Technology 23, 3 (2004), 153-163.
[3] V. Aggarwal, E. Halepovic, J. Pang, S. Venkataraman, H. Yan, Prometheus: Toward quality-of-experience estimation for mobile apps from passive network measurements, in: Proceedings of the 15th Workshop on Mobile Computing Systems and Applications, in: HotMobile '14, ACM, New York, NY, USA, 2014, pp. 18:1-18:6.
[4] J. Hosek, P. Vajsar, L. Nagy, M. Ries, O. Galinina, S. Andreev, Y. Koucheryavy, Z. Sulc, P. Hais, R. Penizek, Predicting user qoe satisfaction in current mobile networks, in: Communications (ICC), 2014 IEEE International Conference on, 2014, pp. 1088-1093.
[5] P. Casas, R. Schatz, F. Wamser, M. Seufert, R. Irmer, Exploring qoe in cellular networks: How much bandwidth do you need for popular smartphone apps?, in: Proceedings of the 5th Workshop on All Things Cellular: Operations, Applications and Challenges, in: AIIThingsCellular '15, 2015, pp. 13-18.
[6] P. Casas, A. D'Alconzo, F. Wamser, M. Seufert, B. Gardlo, A. Schwind, P. Tran-Gia, R. Schatz, Predicting qoe in cellular networks using machine learning and in-smartphone measurements, in: 2017 Ninth International Conference on Quality of Multimedia Experience (QoMEX), 2017, pp. 1-6,
[7] B. Finley, E. Boz, K. Kilkki, J. Manner, A. Oulasvirta, H. Hämmäinen, Does network quality matter? a field study of mobile user satisfaction, Pervasive Mob. Comput. 39 (2017) 80-99.
[8] Asrese, A.S., Eravuchira, S.J., Bajpai, V., Sarolahti, P., Ott, J.: Measuring web latency and rendering performance: method, tools & longitudinal dataset. IEEE Trans. Netw. Serv. Manag. (2019, to appear)
[9] Asrese, A.S., Sarolahti, P., Boye, M., Ott, J.: WePR: a tool for automated web performance measurement. In: IEEE Globecom Workshops (2016).
[10] da Hora, D.N., Asrese, A.S., Christophides, V., Teixeira, R., Rossi, D.: Narrowing the gap between QoS metrics and Web QoE using above-the-fold metrics. In: Bev- erly, R., Smaragdakis, G., Feldmann, A. (eds.) PAM 2018. LNCS, vol. 10771, pp. 31-43. Springer, Cham (2018).
[11] Varvello, M., Blackburn, J., Naylor, D., Papagiannaki, K.: EYEORG: a platform for crowdsourcing web quality of experience measurements. In: ACM Conference on emerging Networking Experiments and Technologies (2016).
[12] Balachandran, A., et al.: Modeling web quality-of-experience on cellular networks. In: ACM MobiCom (2014).
[13] Ahmad, S., Haamid, A.L., Qazi, Z.A., Zhou, Z., Benson, T., Qazi, I.A.: A view from the other side: understanding mobile phone characteristics in the developing world. In: ACM IMC (2016).
[14] Nejati, J., Balasubramanian, A.: An in-depth study of mobile browser performance. In: Conference on World Wide Web, pp. 1305-1315 (2016).
[15] Dasari, M., Vargas, S., Bhattacharya, A., Balasubramanian, A., Das, S.R., Ferd- man, M.: Impact of device performance on mobile internet QoE. In: Internet Measurement Conference, pp. 1-7 (2018).
[16] N. Raveendran, Y. Zha, Y. Zhang, X. Liu and Z. Han, "Virtual Core Network Resource Allocation in 5G Systems using Three-Sided Matching," ICC 2019 - 2019 IEEE International Conference on Communications (ICC), 2019, pp. 1-6.
[17] M Beshley et al. End-to-End QoS "Smart Queue" Management Algorithms and Traffic Prioritization Mechanisms for Narrow-Band Internet of Things Services in 4G/5G Networks. Sensors. 2020; 20(8):2324.
[18] M. Vincenzi, E. Lopez-Aguilera and E. Garcia-Villegas, "Timely Admission Control for Network Slicing in 5G With Machine Learning," in IEEE Access, vol. 9, pp. 127595-127610, 2021, doi: 10.1109/ACCESS.2021.3111143.
[19] T. Shimojo, M. R. Sama, A. Khan and S. Iwashina, "Cost-efficient method for managing network slices in a multi-service 5G core network," 2017 IFIP/IEEE Symposium on Integrated Network and Service Management (IM), 2017, pp. 1121-1126.
[20] Leyva-Pupo, I., Cervelló-Pastor, C., & Llorens-Carrodeguas, A. (2019, June). Optimal placement of user plane functions in 5G Networks. In International Conference on Wired/Wireless Internet Communication (pp. 105-117). Springer, Cham
[21] V. M. Alevizaki, A. I. Manolopoulos, M. Anastasopoulos and A. Tzanakaki, "Dynamic User Plane Function Allocation in 5G Networks enabled by Optical Network Nodes," 2021 European Conference on Optical Communication (ECOC), 2021, pp. 1-4.
[22] M. Mu, S. Simpson, A. Farshad, Q. Ni and N. Race, "User-level fairness delivered: Network resource allocation for adaptive video streaming," 2015 IEEE 23rd International Symposium on Quality of Service (IWQoS), 2015, pp. 85-94.
[23] Jia, Q., Xie, R., Huang, T., Liu, J., & Liu, Y. (2017). Efficient caching resource allocation for network slicing in 5G core network. IET Communications, 11 (18), 2792-2799.
[24] Q. Wang et al., "Enable Advanced QoS-Aware Network Slicing in 5G Networks for Slice-Based Media Use Cases," in IEEE Transactions on Broadcasting, vol. 65, no. 2, pp. 444-453, June 2019.
[25] F. Song, J. Li, C. Ma, Y. Zhang, L. Shi and D. N. K. Jayakody, "Dynamic Virtual Resource Allocation for 5G and Beyond Network Slicing," in IEEE Open Journal of Vehicular Technology, vol. 1, pp. 215-226, 2020.
[26] Z. Shu and T. Taleb, "A Novel QoS Framework for Network Slicing in 5G and Beyond Networks Based on SDN and NFV," in IEEE Network, vol. 34, no. 3, pp. 256-263, May/June 2020.
[27] F. Z. Yousaf et al., "Network slicing with flexible mobility and QoS/QoE support for 5G Networks," 2017 IEEE International Conference on Communications Workshops (ICC Workshops), 2017, pp. 1195-1201.
[28] M. Jiang, M. Condoluci and T. Mahmoodi, "Network slicing management & prioritization in 5G mobile systems," European Wireless 2016; 22nd European Wireless Conference, 2016, pp. 1-6.
[29] S. Wang and R. Ferrús, "On the use of prioritization and network slicing features for mission critical and commercial traffic multiplexing in 5G Radio Access Networks," 2019 IEEE Symposium on Computers and Communications (ISCC), 2019, pp. 1-6.
[30] D. Kahneman. Attention and Effort. Prentice-Hall, Englewood Cliffs, 1973.
[31] C. Martinez-Peñaranda, W. Bailer, M. Barreda-Ãngeles, W. Weiss, and A. Pereda-Baños. A psychophysiological approach to the usability evaluation of a multi-view video browsing tool. In S. Li, A. El Saddik, M. Wang, T. Mei,
[32] R. E. Nisbett and T. D. Wilson. Telling more than we can know: Verbal reports on mental processes. Psychological Review, 84(3):231-259, 1977.
[33] S. Monsell. Task switching. Trends in Cognitive Sciences, 7(3):134-140, 2003.

### Description of the Invention

Present invention is premised on the observation that the subjective nature of perceived latency (especially in smaller ranges that may not be consciously perceived by end-users) creates an opportunity for MNOs to optimize cellular network resources provisioning by prioritizing the most sensitive/vulnerable users when resources are scare (such as in the case of the edge), if no degradation is estimated on the QoE for the more tolerant user. More specifically, web traffic can be served to each user at custom network performance depending on the estimated behavioural impact on the user; if no negative impact is estimated on the QoE, packet flows may be served with high latencies by allocating less network resources. The alternative of applying a "fair" i.e., equal distribution of network resources would result in a sub-optimal re-distribution, which in fact stands against Net Neutrality principles because it achieves the opposite result. Furthermore, this paradigm shift has obvious implications when it comes to the assessment of QoE of the end-user, but may also bring financial benefits to MNOs in the form of decreased hardware investments and reduced energy consumption.

In a first aspect, a method for network traffic prioritization in a cellular network is proposed. The method comprises determining, by a processor, for at least one given user of the cellular network, a user's perception matrix, which defines a baseline user subjective experience of some conditions of the cellular network, by means of processing one or more neurophysiological signals of the giver user; determining, by a processor, latency perception thresholds of the given user, which consider emotional reactions of the given user and how an increase of a latency response affects the given user, by executing an emotion bifactorial model that involves both intensity of the emotion/s and how positive or negative the emotion is/are, and by computing a variation of observed network QoS metrics/proxies and estimating their impact on a QoE of the given user; and determining, by a processor, an allocation of network resources to a computing device of the given user based on the determined user's perception matrix and latency perception thresholds.

In some embodiments, the neurophysiological signals are stored in a memory or database before being processed.

In some embodiments, the neurophysiological signals are obtained by means of using one or more of the following electroencephalography signals; the Davidson's model of motivation and/or the Frontal Alpha Asymmetry model; a functional near-infrared spectroscopy techniques; and/or peripheral nervous system activity measurements including electrodermal activity, facial electromyography, and/or phasic and tonic changes in heart rate.

In some embodiments, the QoS proxies are computed using the page load time, the RUM index, network latency, bandwidth perceived by the given user, actual bandwidth and/or packet loss.

In some embodiments, the emotional reactions are determined by using one or more of the following electrodermal activity and electromyography signals of the given user; electroencephalography signals; and/or electroencephalography signals over the corrugator supecilii.

Other embodiments of the invention that are disclosed herein also include a system and software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Thus, the present invention provides a novel method for operationalizing an intelligent network resources allocation for user devices connected to cellular network by accounting for perceptual factors and latent effects of QoS on QoE, this achieving a fair and efficient edge optimization. The proposed method is premised on Rawlsian and Post-Rawlsian Principles (RPMF) that embed the ethos of Rawlsian principles within Fair AI algorithms to derive a formalism of an optimal strategy for dealing with human-centric factors and latent cognitive phenomena not previously accounted for.

The invention goes beyond the existing net neutrality paradigm, which depends only on the network factors, and considers human factors into account while sharing the network resources. The invention provides a potential adoption of fairer network practices by the operators when it comes to traffic prioritization.

The ground-breaking nature of the proposed invention is manyfold:
- The proposed cross-modal framework of analysis will help overcome present limitations in experimental protocols (that rely on network-centric analyses and/or weak proxies of QoE) and allow for a robust measurement and analysis (at a micro-level) of QoE-related indicators.
- From a methodological viewpoint, the proposed joint modelling of network-based descriptors with human neurophysiological responses in an embedding space will guide representation learning to other contexts and environments. This implies a change in BCI research: moving from controlled experiments designed to evoke intended neurophysiological potentials with hand- crafted features to an implicit ML-driven paradigm of utilizing naturally occurring effects discovered by computation. Thus, we are approaching a new experimental paradigm that can be conducted "in-the-wild", by achieving a non-invasive, automatic, and scalable realization of online measurements, which will overcome the problems related to traditional psycho-physiological methods.

### Brief Description of the Drawings

The previous and other advantages and features will be more fully understood from the following detailed description of embodiments, with reference to the attached figures, which must be considered in an illustrative and non-limiting manner, in which:

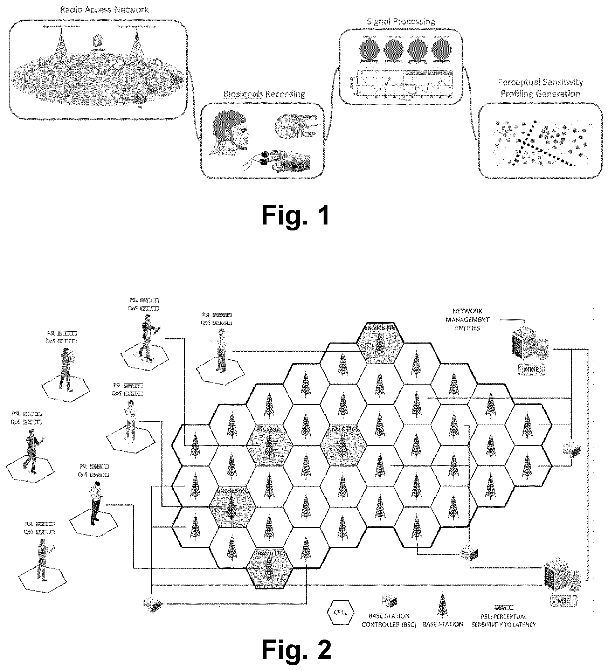

Fig. 1: Schematic representation of the proposed framework for establishing the subjective perception baselines.
Fig. 2: Schematic representation of the proposed network resources allocation using knowledge on perceptual sensitivity to latency and other QoE metrics.
Fig. 3: 5G architecture with related network functions.
Fig. 4: Tunnels in 5G: Data Radio Bearer, QoS Flows, Service Data Flow and GTP-U.
Fig. 5: UE or network requested PDU Session Modification (for non-roaming and roaming with local breakout)

### Detailed Description of the invention and of Preferred Embodiments

The proliferation of Internet-enabled end-user devices and the penetration of newer access technologies has enabled users to seamlessly be connected to the online world. This, in turn, has resulted in the growth of resource-hungry applications such as AR, VR, 360 live streaming, etc. To tackle this demand, network researchers have been working on network adaptability through range of mechanisms for prioritizing the network and application traffic mainly using sophisticated machine and deep learning mechanisms. Present invention refers to a complementary approach that makes a better provisioning of the user traffic through fundamental user behaviour, rather than just considering the network demand, end user device capabilities and/or application requirements. We detail here how the user behaviour can be captured and quantified while accessing the Internet-based applications. Further present invention proposes a traffic prioritization mechanism based on decomposed network functions in 5G, for allocating resources considering the user behaviour. The goal of the present invention is to leverage the users' natural resilience to network delays for connecting and using the Internet from a mobile device and to provide a novel framework to support resource allocation for supporting QoE guarantees.

To this end, both quantification of the perceptual sensitivity to the network QoS metrics (e.g., latency, throughput, etc.) and description of the mechanism by which these metrics are perceived becomes essential to the development of countermeasures, such as predictive compensation by means of intelligent and adaptive network resource allocation. The framework strives to achieve a balance between resource allocation and human perception of QoE in a fair manner. Three aspects of the proposed framework are: (i) a new human perception factor matrix for isolating human features; (ii) a metric regularizer that extracts network information and provide resource requirements; (iii) an effective mechanism, adhering to 3GPP standards, to prioritize users based on the human-perception and network features.

### Human Perception Matrix

The component is intended for establishing the user perceptual sensitivity thresholds for network conditions and consists of neurophysiological data acquisition by means of sophisticated measuring methodologies, while studying the dynamics of human information processing in real-world testing grounds.

The proposed approach for capturing the human perception matrix is grounded on cognitive psychology, a view that is dominant in psychological research and in which people are characterized as "information processors". In this framework, perception is the first stage in information processing, and refers to the processes whereby sensory information from the environment is made available to information processing systems. In turn, cognitive reactions refer to those processes by which information is manipulated (e.g., filtered, coded, compared). With this perspective in mind, present invention proposes a cross-modal definition of QoE in relation to QoS metrics derived from the network conditions, which will be validated experimentally by exploiting trial-by-trial electrophysiological variability to build parametric QoE predictors. The mobile network domain provides a context ripe for exploring user experiences, since it embodies a range of behaviors (e.g., browsing, searching, video streaming), cognitive processes (e.g., deciding what to read, interpreting the content) and affective constituents of online interactions (e.g., how does latency in mobile browsing impacts user engagement).

For this type of analysis, a wide collection of methods from psychological research are considered by the present invention. First, to analyze conscious processes, there are standardized questionnaires for measuring perceptual aspects, cognitive working load, or affective reactions, among others. However, research on human information processing has provided systematic evidence that human beings are not consciously aware of the mental processes determining their behaviour, such as the processing of emotional information.

Since it is unlikely that people can report information about processes over which they have little or no awareness, present invention places the emphasis on methods that allow exploring unconscious or automated psychological processes. Such methods provide online, moment by moment information, and are not affected by subjective biases. Among the available modalities, electroencephalography (EEG) is the most widely used method when the central nervous system is the object of measurement, since it can provide information about attention, cognitive effort, as well as emotional reactions. Here, present invention can account for prior research on user experience using EEG methods, which has typically focused on the analysis of power spectral density (PSD) of frequency bands such as the delta (1-4 Hz), theta (4-8 Hz), alpha (8-13 Hz), beta (13-30 Hz) and gamma (36-44 Hz) bands [60]. Beyond that, present invention considers unstructured stimuli as well; blocked designs will be introduced (on top of event-related ones) as, depending on the experimental design, precise control over the timing of the target responses may not always be available.

Additionally, to establish the baseline subjective experience, the Davidson's model of motivation, which proposes that human behaviour is driven by two motivational systems: the approach system, which is activated in the presence of desirable stimuli, and the withdrawal system, which reacts when aversive stimuli is encountered, can be considered by the proposed method. Several studies have suggested that emotional state is specifically associated with activity in prefrontal cortex (PFC). Typically, asymmetrical frontal cortical brain activation is assessed by means of alpha power (8-13 Hz) difference in electroencephalography between right and left frontal electrodes. This is a highly relevant measure due to its properties: relatively larger resting right frontal cortical brain activation has been labeled as a risk factor for emotion-related disorders and recent work has demonstrated that higher symptom severity of depression and anxiety are significantly correlated with relatively larger right frontal cortical activation. Also, Frontal Alpha Asymmetry (FAA) has been demonstrated to be a reliable measure for analyzing user experience in a diversity of media- or commercial-related contexts.

In addition, in some embodiments, the invention proposes the incorporation of functional near-infrared spectroscopy (fNIRS). Recent fNIRS studies have found that changes in affective state generated by emotional induction tasks can elicit activation in the PFC. For example, valenced images have been shown to stimulate changes in prefrontal hemodynamics detectable with NIRS. It is considered that since emotional induction tasks can consistently generate distinct patterns in the NIRS hemodynamic response, the inclusion of this modality will complement other data channels. This cross-modal approach has been successfully applied in prior work and has demonstrated that a hybrid or combined fNIRS-EEG system can improve the classification accuracy for BCI and is superior to EEG-BCls or fNIRS-BCIs alone.

Other peripheral nervous system activity measurements that are informative when measuring cognitive and emotional reactions can be introduced as complementary signals. Among the most popular are electrodermal activity (EDA), which provides information about emotional arousal and cognitive effort, facial electromyography (EMG), which can inform about the valence of emotional reactions, and phasic and tonic changes in heart rate (HR), which are related to attention, cognitive effort and stress, and emotional reactions.

### Metric Regularizer

The second component helps determining users' latency perception thresholds using inferential psychometric and other adaptive models and map to the network resource requirement. The signals for this component will be obtained through the registration of neuro-physiological responses, which entail a series of shortcomings when the intention is to apply them massively in online environments. To this end, a series of offline laboratory experiments will validate the performance of automatic and scalable techniques for QoE analysis in real-life environments, using neuro-physiological signals as the ground truth. Previous research has examined the precision, stability, efficiency, and complexity of operation interaction and performance with latency-plagued systems, using various psychometric quantities (e.g., Gaussian psychometric functions), which the present invention additionally considers for establishing perceptual latency thresholds.

Psychophysics is an area of perceptual psychology that employs specific behavioral methods to study the relation between physical stimulus intensity and sensation reported by a human participant. The amount of change in a stimulus required to produce a noticeable difference in sensation is defined as the *difference threshold.* For example, if the intensity of a stimulus is 10 units and the stimulus must be increased to 14 units to produce a just noticeable increment in sensation, then the difference threshold would be 4 units. More recently, the term *difference threshold (DL)* has been used interchangeably with the term *Just Noticeable Difference* (JND). The basic procedure for measuring thresholds is to present a stimulus to participants and ask them to report whether they perceive the stimulus. Biological systems (e.g., humans), however, are not fully deterministic in their reactions and, therefore, such thresholds can be defined and studied in a statistical manner. In more detail, participants' psychophysical functions for the discrimination of latency can be measured with a two- interval, two-alternative forced-choice (2AFC) technique. Specifically, present invention considers two intervals that are the reference stimulus (R) (i.e., the standard) and the probe stimulus (P), which may or may not be different from the standard. The standard stimulus, R is held to a particular constant, with the order of presentation of reference and probe stimuli randomized. The standard stimulus for present invention's setting is based on the radio network's 12.5 ms minimum latency setting. The participants are forced to choose between whether the two intervals are perceived as different or the same. An alternative method is the Bayesian threshold estimation approach ZEST, which allows to perform exact threshold estimations with very few trials. The said approach assumes a hypothetical prior distribution of perception thresholds, and then estimates the perception threshold (i.e. the optimal latency of the probe to test for this threshold) based on participant's performance in each prior trial. Therefore, a correct (incorrect) answer at a given latency level leads to a decrease (increase) of the participant's estimated perception threshold, which in turn is used as the latency level of the probe for the next trial. The update of the prior distribution is done via multiplication with a likelihood function which gives the probability of a correct (or incorrect) answer depending on the participant's current estimated perception threshold and the latency of the probe.

However, as said before, research on HIP has consistently demonstrated that human beings are not consciously aware of the mental processes determining their behaviour.

Such unconscious influences have obvious implications when it comes to the assessment of QoE in human-computer interaction (HCI) contexts. Psychophysiological methods can be very helpful in unveiling attentional and emotional reactions that are not consciously available. Besides the fact that they provide information on unconscious processes, other advantages of these methods include their high temporal and spatial resolution, and their robustness against cognitive biases (e.g., social desirability bias). Hence, they always provide "honest" responses.

The proposed method considers the use of physiological methods (e.g., electrodermal activity, electromyography) to acquire information on the subtle emotional reactions of users and how they are affected by increasing response latency. One approach is to rely on the bifactorial model of emotions, involving two factors: arousal (the intensity of the emotion) and valence (how positive or negative the emotion is). Although this approach requires the use of physical sensors, the sensors do not invade user's privacy and can capture short-term changes not measurable by other means. In the proposed network metrics analysis, the proposed method is focused on the variation in the observed network QoS proxies and estimates their impact on users QoE. In general, the two approaches are complementary and allow for a more accurate and holistic investigation of the network in applications such mobile web browsing. Specifically, present invention measures QoS in terms of the page load time (PLT), RUM index, network latency, user perceived bandwidth, actual bandwidth, and packet loss.

One advantage of the present invention is the consideration of latency values used much lower than what prior scientific research has claimed as the threshold for conscious detection of the delays. The reason for that is because, even if these small latencies are unnoticeable, they produce observable reactions in the users. Moreover, the combined measurement of physiological aspects of emotions with self-reported measures of affect, attention, and QoE, allows exploring both conscious and "not-necessarily" conscious aspects of the subjective user experience and obtaining an accurate picture of how lower or higher latency values affect it.

According to an embodiment, the proposed method comprises the following: to analyze the emotional reactions of users by considering two (or more) types of physiological measures: (i) electrodermal activity (EDA) and (ii) electromyography (EMG). EDA, which refers to the conductivity of the skin, varies according to the activation of the sympathetic branch of the autonomous nervous systems and has been commonly used as an index of emotional arousal. Given this, different aspects of the EDA signal such as the general level of skin conductance or the amplitude or latency of momentary skin conductance responses (SCRs) can be used. Considering that the SCRs associated to a certain stimulus can take up to 6 seconds from stimulus onset to the point where it reaches the peak of the response, a sufficiently long time window must be considered to capture the SCRs related to latency phenomena. Moreover, another physiological method commonly it can be used to quantify the valence of the stimuli is the activity of facial muscles, measured through EMG techniques. More specifically, the activity over the corrugator supercilii (EMG-CS), a muscle on the eyebrow responsible for frowning, has been used as a proxy for the negative valence of the experienced emotions. Since the muscular response appears to be immediate after the stimuli onset, a smaller time window can be considered to capture the possible post- latency event changes in the EMG activity. As it can be anticipated that higher latency values would lead to an emotionally negative experience for the users, and this would manifest itself as higher levels of arousal and as negative valence, the method also predicts higher levels of SCR and more intense EMG-CS activity in response to higher latency values.

These experiments will help validate the use of online techniques that, in addition to user profiles and trait factors. By doing so, the problems related to more traditional psycho-physiological methods (such as the placement of electrodes on the body, or the reduction of ecological validity) can be overcome. From a methodological viewpoint, the proposed method presents important advantages to be applied for the online analysis of user behaviour beyond the psychology laboratory, allowing for automatic and online measurements.

In summary, in the proposed method, an experimental impasse is addressed by employing advanced methods in non-invasive neuroimaging that will allow for a comprehensive spatiotemporal analysis of all putative variables, and the derivation of objective and reliable QoE descriptors. Such examples are electrophysiological techniques (e.g., EEG, EDA, EMG) and functional near-infrared spectroscopy (fNIRS), that can offer information with a high temporal resolution that is lacking in subjective methods. The above will operationalize relevant psychological constructs and leverage the knowledge of the former - as inferred from controlled settings - to quantify the impact of network effects on QoE, and provide a set of cross-modal descriptors that will support the proposed intelligent and adaptive radio network resource allocation.

### Behaviour-Aware Prioritization In 5G And Beyond

A novel flow-based prioritization mechanism based on the captured perception matrix and the regularizer is proposed. The scheme aims to efficiently differentiate and route the user traffic and thereby guaranteeing user satisfaction for accessing different applications/services.

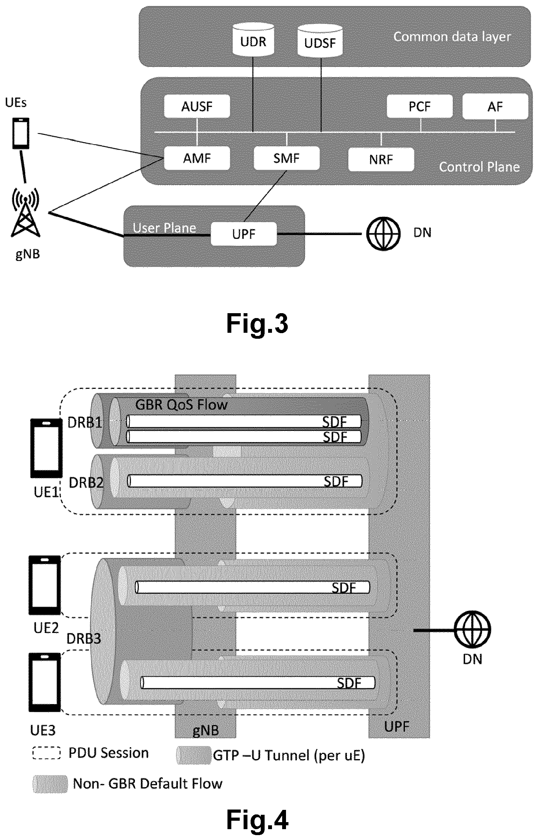

While the proposed approach is agnostic to any access technology where prioritization of traffic flows can be applied, an embodiments showcases the idea with current 5G access technology. In general, a 5G network infrastructure consists of three parts (i) Radio Access Network (RAN), (ii) Transport Network (TN), and a Core Network (CN). End user equipment that connects to 5G through a base station, which forms a major part of the RAN. TN acts as a connection between RAN and CN. TN covers a few kilometers to longer distances to connect different RANs and CNs. CN represents the core network that manages all the network functions forming a mobile operator network and enables connectivity of users to the Internet and other services through these network functions. Fig. 3 presents a high-level architecture and components of the 5G system (5GS) required for this proposal.

Overall, 5G core (5GC) is composed of network functions (NFs) such as session management function (SMF), access and mobility function (AMF), etc. forming a service-based architecture (SBA), thereby exposing these NFs' capabilities via RESTful APIs. Furthermore, the function and data separation enable NFs to be stateless in the control plane. The data is stored in remote UDR (Unified Data Repository) and UDSF (Unstructured Data Storage Function) for structured and unstructured 3GPP NF data storage respectively for these stateless NF operations. 5G core can also support other access technologies (e.g., residential network) using 5G Access Gateway Function. Several alternatives to optimize the core functionalities have also been proposed mainly looking at improving the performance and resilience of the CN.

The major NFs that can benefit in the proposed prioritization scheme are:
(i) Access and Mobility Management Function (AMF) which provides the access function to decide on allowing gNBs and other access networks to connect to the 5GC. Further, it controls which UEs can access the 5GC to exchange traffic with the DNs and manages the mobility of UEs.
(ii) Session Management Function (SMF) that keeps a track of user sessions, which comprises of multiple Packet Data Unit (PDU) sessions. The invention leverages the functions capability to maintain a record of QoS Flows in the 5GS for user equipment (UE) to make sure their states are synchronized across the NFs. SMF also receives Policy and Charging Control (PCC) Rules from the Policy Charging Function (PCF) and convert these Rules into Service Data Flow (SDF) Templates, QoS Profiles and QoS Rules for the user UPF, gNB and UE respectively for QoS Flows management.
(iii) User Plane Function (UPF) that acts as packet forwarder between the access network and the data network (DN), which acts as a gateway to the Internet. It also enforces QoS on UE's uplink and downlink traffic in 5GC using the SDF Templates sent by the SMF to the UEs.
(iv) Unified Data Management (UDM) that acts as a data store and stores the UE's subscription data with the identifier keys.
(v) gNodeB (gNB) is a 5G New Radio (NR) that implements various advanced 5G RF technology.
(vi) Authentication Server Function (AUSF) offers services to the UDM for it to authenticate UEs for accessing the 5G network.

In a typical connection establishment procedure, when the UE is turned on in a 5G available area, UE will perform the registration procedures with the 5GS starting with the AMF to authenticate. The AMF in turn contacts the UDM and AUSF to check whether the user is registered to the network and has a valid subscription. Once the procedure is completed, the UE will initiate a PDU session establishment to the AMF (via gNB). The objective of this session establishment is to establish a default QoS flow between the end user device and the DN. The UE then uses the QoS Flow inside the PDU to exchange the traffic with the Internet. Additional QoS flows can be setup based on the traffic requirements. Thus, QoS Flow forms a granular way to enforce the 5G QoS.

Each QoS flow packet is classified and marked using QoS Flow Identifier (QFI). The 5G QoS flows are mapped in the Access Network to DRBs (Data Radio Bearers). 5G QoS architecture supports: (i) GBR (Guaranteed Bit Rate) QoS flow which requires guaranteed flow bit rate (ii) Non-GBR QoS flow which does not require guaranteed flow bit rate and (iii) Delay Critical QoS flow, for Mission Critical guaranteed flow bit rate.

Fig. 4 shows an example of 3 UEs that have successfully established PDU for traffic exchange with the DN. The default QoS Flow is a non-GBR QoS Flow without any packet filter. That is, the QoS Flow of the PDU Session allows the UE to exchange best-effort traffic with the DN. More importantly, it enables the UE to create additional Dedicated QoS Flows to support its more QoS-demanding traffic such as voice, video, autonomous driving, and gaming traffic etc. The focus of the proposed approach is about establishing Dedicated QoS Flows based on perceptual characteristics of human-users for a PDU Session to enrich the 5G experience of a UE in addition to its best-effort Default QoS Flow.

A Service Data Flow (SDF) is a traffic stream between a UE and the DN where the SDF's QoS requirements can be satisfied by the QoS Flow carrying the SDF. For example, in case of UE1,
- non-priority browsing traffic can be exchanged between UE and the DN using non-GBR Flow.
- for a priority video conference traffic, the UE can request a separate GBR QoS Flow to Application Function (AF).

The AF will initiate a QoS Flow setup to the PCF for it to generate a PCC Rule to the SMF. The SMF will then formulate different QoS constructs such as SDF Template, QoS Profile, QoS Rule and send to UPF, gNB and UE respectively. If the UE, gNB and UPF can satisfy these constructs the QoS Flow Identifier (QFI) that is sent to the SMF with the SDF Template, QoS Profile and QoS Rule representing the QoS characteristic of the QoS Flow. The SMF then updates the UPF with a PDU Session Modification Request to update the UEs PDU Session to either modify an existing or creating a new QoS Flow suitable for the high priority traffic or SDF.

In some embodiments, present invention comprises handling this Dedicated QoS Flow based on the behaviour, along with the user registration, the human perception matrix registered to the service provider. Corresponding rules for PCC are set during this stage for the network requirements. This can be updated over time, whenever user prefers to update these metrics. Users have the choice to not provide this input as well.

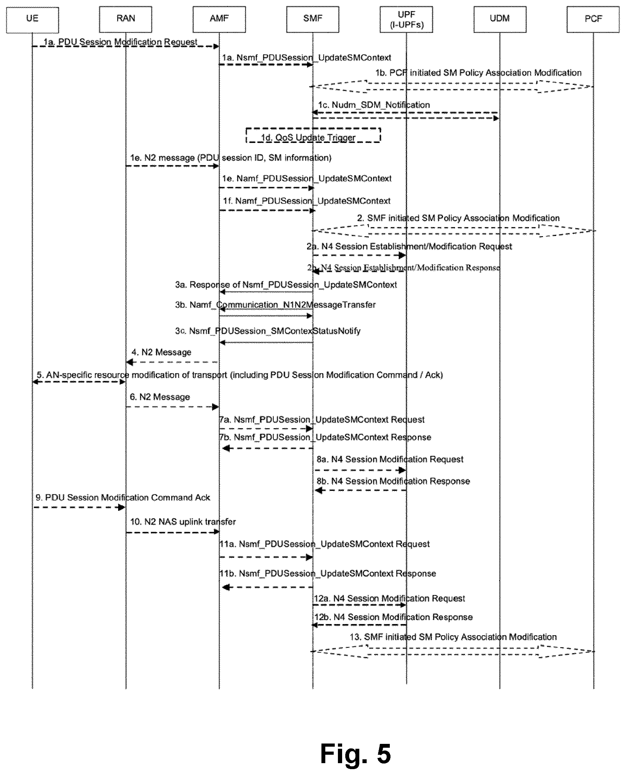

Here it is explained how this Dedicated QoS Flow can be setup adhering to the 3GPP standards. Fig. 5 shows the PDU Session Modification by UE/Network. Present invention's proposal mainly focuses on including the priority based on perceptual sensitivity of the user through updating PCC rules which corresponds to messages 1b to 3c in the figure. A PDU Session Modification support the two types of PCC for creating Dedicated QoS Flows for a UE (i) predefined PCC - PCF sends the name of predefined PCC to the SMF. If all the NFs (SMF and UPF) have the corresponding QoS, then the Dedicated QoS Flow is setup based on the predefined PCC's requirements. (ii) dynamic PCC - in this case, instead of name, PCF sends all the QoS requirements (e.g., 5Qi, GBR, MBR, etc.,) to the SMF and the Dedicated QoS flow is set up in a dynamic fashion. Thus, the Dedicated QoS flow is setup in either of these ways taking service as well as the user behavior into account.

Those skilled in the art will recognize that the present teachings are amenable to a variety of modifications and/or enhancements. For example, although the implementation of various components described herein may be embodied in a hardware device, it may also be implemented as a software only solution-e.g., an installation on an existing server. In addition, the invention may be implemented as a firmware, firmware/software combination, firmware/hardware combination, or a hardware/firmware/software combination.

The scope of the present invention is defined in the following set of claims.

## Claims

1. A computer implemented method for network traffic prioritization in a cellular network, comprising:
determining, by a processor, for at least one given user of the cellular network, a user's perception matrix, which defines a baseline user subjective experience of some conditions of the cellular network, by means of processing one or more neurophysiological signals of the giver user;
determining, by a processor, latency perception thresholds of the given user, which consider emotional reactions of the given user and how an increase of a latency response affects the given user, by executing an emotion bifactorial model that involves both intensity of the emotion/s and how positive or negative the emotion is/are, and by computing a variation of observed network QoS metrics and estimating their impact on a QoE of the given user; and
determining, by a processor, an allocation of network resources to a computing device of the given user based on the determined user's perception matrix and latency perception thresholds.

2. The method of claim 1, wherein the neurophysiological signals being stored in a memory or database.

3. The method of any one of the previous claims, wherein the neurophysiological signals being obtained by means of using one or more of the following:
- electroencephalography signals;
- the Davidson's model of motivation and/or the Frontal Alpha Asymmetry model;
- a functional near-infrared spectroscopy techniques; and/or
- peripheral nervous system activity measurements including electrodermal activity, facial electromyography, and/or phasic and tonic changes in heart rate.

4. The method of any one of the previous claims, wherein the QoS metrics are computed using a page load time, a RUM index, network latency, bandwidth perceived by the given user, actual bandwidth and/or packet loss.

5. The method of any one of the previous claims, wherein the emotional reactions being determined by using one or more of the following:
- electrodermal activity and electromyography signals of the given user;
- electroencephalography signals over the corrugator supecilii.

6. A system for network traffic prioritization in a cellular network, comprising a memory and one or more processors, the one or more processors being configured to:
determine, for at least one given user of the cellular network, a user's perception matrix, which defines a baseline user subjective experience of some conditions of the cellular network, by means of processing one or more neurophysiological signals of the giver user;
determine, latency perception thresholds of the given user, which consider emotional reactions of the given user and how an increase of a latency response affects the given user, by executing an emotion bifactorial model that involves both intensity of the emotion/s and how positive or negative the emotion is/are, and by computing a variation of observed network QoS metrics and estimating their impact on a QoE of the given user; and
determine, an allocation of network resources to a computing device of the given user based on the determined user's perception matrix and latency perception thresholds.

7. A non-transitory computer readable medium comprising code instructions that when executed by a computing device implement the method of any of claims 1 to 5.
